# EUROPEAN PATENT APPLICATION

(11) **EP 4 566 813 A1**
(43) Date of publication of application: **11.06.2025**
(21) Application number: 23849969.3
(22) Date of filing: 26.07.2023
(51) Int. Cl.: B32B 27/00, B32B 27/20, E04F 15/02, E04F 13/07, E04F 13/08, E04F 13/18

(54) **DECORATIVE SHEET AND DECORATIVE BOARD**

(30) Priority: 02.08.2022 JP 2022123117; 04.11.2022 JP 2022177047
(71) Applicant: Toppan Holdings Inc., Tokyo 110-0016 (JP)
(72) Inventor: TAJIMA, Haruka, Tokyo 110-0016 (JP); OTA, Shin, Tokyo 110-0016 (JP); TAKADA, Daiki, Tokyo 110-0016 (JP); ABE, Hayato, Tokyo 110-0016 (JP)
(74) Representative: TBK
(86) International application number: PCT/JP2023/027317
(87) International publication number: WO 2024/029414

(57) **Abstract**

A decorative sheet (10) includes: a sheet base member (1); a design pattern layer (2) that is formed on an upper side of the sheet base member by printing; a first surface protective layer (3) that is laminated on the upper side of the design pattern layer; and a second surface protective layer (4) that is partially laminated on the upper side of the first surface protective layer. The second surface protective layer has gloss different from that of the first surface protective layer. The second surface protective layer includes a thin film portion (4b), and a thick film portion (4a) having a height 1.2 times or more that of the thin film portion in a vertical direction.

## Description

### Technical Field

The present invention relates to a decorative sheet and a decorative plate.

This application claims the benefit of priority from Japanese Patent Application No. 2022-123117 filed in Japan on August 2, 2022 and No. 2022-177047 filed in Japan on November 4, 2022, the contents of both of which are hereby incorporated by reference.

### Background Art

Decorative sheets used as surface materials for furniture and residential building materials are each formed by using a plurality of surface protective layers different in gloss, thereby being provided with visual three-dimensionality, a luxurious impression, or the like. In addition, irregularities are formed on the surface by embossing or the like to provide a three-dimensional tactile sensation. For example, a decorative sheet having a woodgrain pattern is provided with visual three-dimensionality due to the difference in gloss between the vessel portion and another portion of the woodgrain pattern and tactile three-dimensionality due to the irregularities on the surface, thereby making it possible to provide a decorative sheet having a woodgrain pattern that looks more similar to natural wood.

Decorative sheets that each provide a gloss difference and a tactile sensation include a decorative sheet described in PTL 1. A second surface protective layer having gloss different from that of a first surface protective layer is partially laminated on the upper side of the first surface protective layer which is laminated on the upper side of a design pattern layer to provide the decorative sheet described in PTL 1 with visual three-dimensionality. In addition, a third surface protective layer having a thickness four or more times that of the second surface protective layer is partially laminated on the upper side of the second surface protective layer to provide tactile three-dimensionality.

As a result, the decorative sheet described in PTL 1 makes it possible to provide a decorative sheet having visual three-dimensionality and tactile three-dimensionality.

In addition, a decorative sheet used as a surface material for furniture or a residential building material has an uneven shape formed on the surface by embossing or the like to be provided with visual three-dimensionality and tactile three-dimensionality.
For example, in a decorative sheet having a woodgrain pattern, an uneven shape matching the vessel portion of the woodgrain pattern is formed by carrying out embossing or the like on the surface of the decorative sheet, thereby making it possible to provide a decorative sheet having a woodgrain pattern that is provided with visual three-dimensionality and tactile three-dimensionality and looks more similar to natural wood.

Decorative sheets each having three-dimensionality include the decorative sheet described in PTL 1. The decorative sheet described in PTL 1 includes a design pattern layer, a first surface protective layer formed on the design pattern layer, a second surface protective layer partially formed on the first surface protective layer, and a third surface protective layer having a thickness four times or more that of the thickness of the second surface protective layer and which is partially formed on the second surface protective layer. As a result, the decorative sheet described in PTL 1 is provided with a difference in height between the second surface protective layer and the third surface protective layer and therefore has visual three-dimensionality and tactile three-dimensionality.

### Citation List

### Patent Literature

PTL 1: JP 2017-24318 A

### Summary of the Invention

### Technical Problem

The decorative sheet described in PTL 1 may be, however, inferior in design because the gloss difference between the second surface protective layer and the third surface protective layer causes the boundary between the second surface protective layer and the third surface protective layer to be noticeable. In addition, it is necessary to form three surface protective layers, and three gravure plates are necessary for use in printing the surface protective layers, resulting in increased printing cost.

In view of the circumstances, an object of the present disclosure is to provide a decorative plate that is superior in design and coating suitability and a decorative sheet that is used for the decorative plate.

### Solution to Problem

To solve the problem, this disclosure proposes the following means.

A decorative sheet according to the present disclosure includes: a sheet base member; a design pattern layer that is formed on the upper side of the sheet base member by printing; a first surface protective layer that is laminated on the upper side of the design pattern layer; and a second surface protective layer that is partially laminated on the upper side of the first surface protective layer. The second surface protective layer has gloss different from that of the first surface protective layer. The second surface protective layer includes a thin film portion, and a thick film portion having 1.2 times or more as great a height as the height of the thin film portion in a vertical direction.

In the decorative sheet, the second surface protective layer may include a particle portion that is formed by using synthetic resin beads or an inorganic compound filler. The particle portion forms the thick film portion. The particle portion may have an average particle diameter of 15 µm or more.

In the decorative sheet, the second surface protective layer may include a thermosetting resin having a urethane bond.

In the decorative sheet, the second surface protective layer may include an ionizing-radiation-curable resin.

In the decorative sheet, the particle portion may be an acrylic resin bead.

A decorative plate according to the present disclosure includes: the decorative sheet; and a substrate that is bonded on a lower side of the decorative sheet.

A decorative sheet according to the present disclosure includes: a sheet base member; a design pattern layer that is provided on an upper side of the sheet base member; a first surface protective layer that is provided on the upper side of the design pattern layer; and a second surface protective layer that is partially provided on the upper side of the first surface protective layer. The second surface protective layer includes a particle portion that is formed by using a synthetic resin bead or an inorganic compound filler. The particle portion forms an uneven shape on a surface of the second surface protective layer. An area ratio of the particle portion to the second surface protective layer in a plan view from the upper side is 5% or more and 70% or less.

In the decorative sheet, the area ratio of the particle portion to the second surface protective layer in the plan view from the upper side may be 18% or more and 48% or less.

In the decorative sheet, the second surface protective layer may have gloss different from that of the first surface protective layer.

In the decorative sheet, the second surface protective layer may include a thermosetting resin having a urethane bond.

In the decorative sheet, the particle portion may have an average particle diameter of 15 µm or more and 200 µm or less.

In the decorative sheet, the particle portion may be formed by using acrylic resin beads.

A decorative plate according to the present disclosure includes: the decorative sheet; and a substrate that is provided on the lower side of the decorative sheet.

### Advantageous Effects of the Invention

A decorative sheet and a decorative plate according to the present disclosure make it possible to provide a decorative plate that is superior in design and coating suitability and has visual three-dimensionality and tactile three-dimensionality and a decorative sheet that is used for the decorative plate.

### Brief Description of the Drawings

[Fig. 1] Fig. 1 is a cross-sectional view of a decorative plate according to a first embodiment.
[Fig. 2] Fig. 2 is a cross-sectional view of a decorative plate according to each of modification examples 1 to 3 of the first embodiment.
[Fig. 3] Fig. 3 is a schematic cross-sectional view of a decorative plate according to a second embodiment.
[Fig. 4] Fig. 4 is a schematic cross-sectional view of a decorative plate according to each of modification examples 1C and 2C the second embodiment.

### Description of the Embodiments

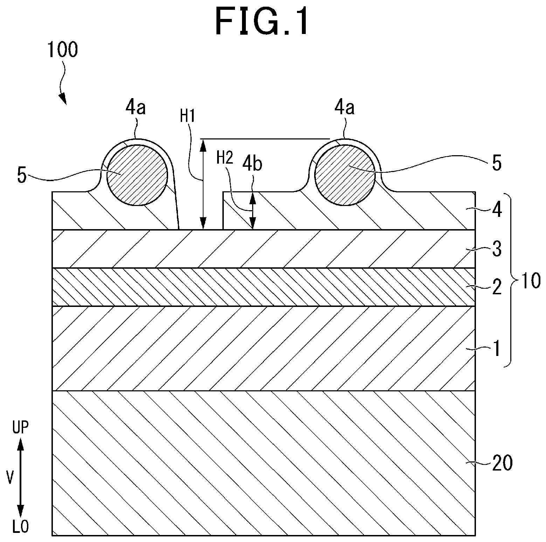

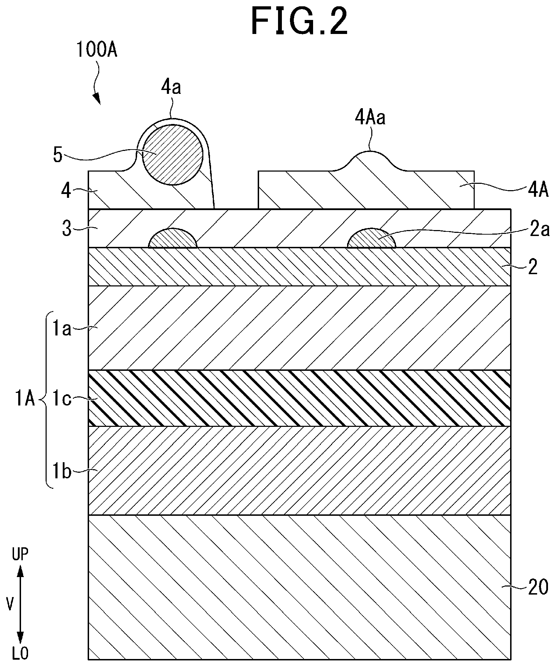

A first embodiment of the present disclosure will be described with reference to Figs. 1 and 2.

Fig. 1 is a cross-sectional view of a decorative plate according to the present embodiment.

In the present embodiment, as illustrated in Fig. 1, the thickness direction of a decorative plate 100 is defined as a "vertical direction V", the side on which a substrate 20 is bonded to a decorative sheet 10 is defined as a "lower side LO" in the vertical direction V, and the opposite side to the side on which the substrate 20 is bonded to the decorative sheet 10 is defined as an "upper side UP" in the vertical direction V.

In addition, as illustrated in Fig. 1, the height of a thick film portion 4a of a second surface protective layer 4 in the vertical direction V is defined as "height H1" and the height of a thin film portion 4b in the vertical direction V is defined as "height H2".

The decorative plate 100 includes the decorative sheet 10 and the substrate 20.

The substrate 20 is bonded on the lower side LO of the decorative sheet 10. It is possible to adopt a particle board, a medium-density fiberboard (MDF), or the like as the substrate 20. In addition, a metal-based plate-shaped member such as aluminum or stainless steel or a composite board having metal such as aluminum bonded to both sides of a core including resin such as polyethylene may be adopted as the substrate 20.

The decorative sheet 10 includes a sheet base member 1, a design pattern layer 2, a first surface protective layer 3, and the second surface protective layer 4.

The sheet base member 1 is a layer that is laminated on the lower side LO of the decorative sheet 10. The sheet base member 1 is a sheet-shaped layer including a known material that allows for printing thereon. It is possible to adopt a fibrous sheet such as thin paper or titanium paper as the sheet base member 1. In addition, a resin sheet such as polyethylene, polypropylene, or polyvinyl chloride may be adopted as the sheet base member 1.

The design pattern layer 2 is a layer that is formed on the upper side UP of the sheet base member 1 by printing. For example, the design pattern layer 2 is formed by printing a design such as a woodgrain pattern, a stone grain pattern, or a sand grain pattern. It is possible to adopt, for example, a known printing method such as gravure printing, offset printing, flexographic printing, silk-screen printing, or ink-jet printing as the printing method. It is possible to adopt, for the design pattern layer 2, a known printing ink suitable for a printing method to be adopted.

The first surface protective layer 3 is a layer that is laminated on the upper side UP of the design pattern layer 2. It is desirable to adopt, for the first surface protective layer 3, a material that is transparent or semi-transparent to the degree to which the material allows the design of the design pattern layer 2 to be seen through. It is possible to adopt a thermosetting resin having a urethane bond, an ionizing-radiation-curable resin such as an acrylic resin, or the like as the first surface protective layer 3. It is possible to adopt, for example, a known printing method such as gravure printing, offset printing, flexographic printing, silk-screen printing, or ink-jet printing as the method for laminating the first surface protective layer 3. In addition, the first surface protective layer 3 may be laminated by using a known coating device.

The second surface protective layer 4 is a layer that is partially laminated on the upper side UP of the first surface protective layer 3. It is desirable to adopt, for the second surface protective layer 4, a material that is transparent or semi-transparent to the degree to which the material allows the design of the design pattern layer 2 to be visible through the first surface protective layer 3. It is possible to adopt a thermosetting resin having a urethane bond, an ionizing-radiation-curable resin such as an acrylic resin, or the like for the second surface protective layer 4.

The first surface protective layer 3 and the second surface protective layer 4 have different glosses. Methods for giving a difference in gloss between the first surface protective layer 3 and the second surface protective layer 4 include a method in which a matting agent is added to the first surface protective layer 3 or the second surface protective layer 4. For example, in a case where no matting agent is added to the first surface protective layer 3 and a matting agent is added to the second surface protective layer 4, the first surface protective layer 3 has higher gloss than that of the second surface protective layer 4. Different quantities of matting agents to the degree to which it is possible to provide a difference in gloss between the first surface protective layer 3 and the second surface protective layer 4 may be added to the first surface protective layer 3 and the second surface protective layer 4.

The difference in gloss between the first surface protective layer 3 and the second surface protective layer 4 allows a human to visually feel three-dimensionality by using an optical illusion.

The second surface protective layer 4 includes a particle portion 5. The particle portion 5 includes a synthetic resin bead or an inorganic compound filler and provides the second surface protective layer 4 with tactile three-dimensionality. It is desirable to adopt, for the particle portion 5, a material that is transparent or semi-transparent to the degree to which the material allows the design of the design pattern layer 2 to be seen through the first surface protective layer 3 and the second surface protective layer 4. It is desirable to adopt an acrylic resin bead having an average particle diameter of 15 µm or more that is high in transparency and is capable of giving tactile three-dimensionality as the particle portion 5.

In addition, the second surface protective layer 4 includes the thick film portion 4a and the thin film portion 4b that has less height than the height H1 of the thick film portion 4a in the vertical direction V. The thin film portion 4b has, for example, a coating thickness (height H2) of 0.5 µm or more and 13 µm or less. The thin film portion 4b is laminated on the upper side UP of the first surface protective layer 3 to have substantially constant coating thickness (height H2).

The thick film portion 4a is formed at the position at which the particle portion 5 is disposed in the second surface protective layer 4. A printing resin that forms the second surface protective layer 4 covers the particle portion 5 to cause the thick film portion 4a to have greater height than the height of the thin film portion 4b in the vertical direction V by the particle diameter of the particle portion 5. The thick film portion 4a therefore protrudes on the upper side UP in comparison with the thin film portion 4b.

The second surface protective layer 4 may change in height gradually from the height H1 of the thick film portion 4a to the height H2 of the thin film portion 4b. For example, the printing resin of the second surface protective layer 4 is pulled by the synthetic resin bead of the particle portion 5 because of surface tension and a gradually inclined surface is formed between the thick film portion 4a and the thin film portion 4b.

To provide superior visual three-dimensionality and tactile three-dimensionality, the height H1 of the thick film portion 4a of the second surface protective layer 4 is 1.2 times or more the height H2 of the thin film portion 4b.

It is possible to adopt intaglio printing such as gravure printing as a method for laminating the second surface protective layer 4.
For example, of grooves into each of which a printing resin flows in a gravure plate used for gravure printing, a printing resin and the particle portion 5 flow into grooves deeper than the particle diameter of the particle portion 5, but only the printing resin flows, without the particle portion 5, into grooves shallower than the particle diameter of the particle portion 5. As a result, a portion at which the particle portion 5 is disposed and a portion at which the particle portion 5 is not disposed are formed in the second surface protective layer 4. The portion at which the particle portion 5 is disposed forms the thick film portion 4a and the portion at which the particle portion 5 is not disposed forms the thin film portion 4b.

It is desirable that the second surface protective layer 4 be formed at a position matching that of the design pattern layer 2. For example, in a case where the design pattern layer 2 has a woodgrain pattern, the second surface protective layer 4 is formed at the position matching that of the vessel portion of the woodgrain pattern, thereby making it possible to provide the vessel portion with visual three-dimensionality because of the difference in gloss between the first surface protective layer 3 and the second surface protective layer 4.

In addition, it is desirable that the thick film portion 4a of the second surface protective layer 4 be formed at a position matching that of the design pattern layer 2. For example, in the case where the design pattern layer 2 has a woodgrain pattern, the thick film portion 4a is formed at positions matching the vessel portion of the woodgrain pattern, thereby making it possible to provide the vessel portions with tactile three-dimensionality because of the difference between the height H1 of the thick film portion 4a and the height H2 of the thin film portion 4b. As a result, the combination of the visual three-dimensionality and the tactile three-dimensionality emphasizes the three-dimensionality of the vessel portions more and makes it possible to provide a decorative sheet 10 having a woodgrain pattern that looks more similar to natural wood.

In the decorative sheet 10 and the decorative plate 100 according to the present embodiment, the first surface protective layer 3 and the second surface protective layer 4 have different glosses and thus have visual three-dimensionality. In addition, the height H1 of the thick film portion 4a of the second surface protective layer 4 is 1.2 times or more the height H2 of the thin film portion 4b and thus provides tactile three-dimensionality. That is, the two layers of the first surface protective layer 3 and the second surface protective layer 4 make it possible to provide visual three-dimensionality and tactile three-dimensionality. The combination of the visual three-dimensionality and the tactile three-dimensionality makes it possible to provide more emphasized three-dimensionality. In addition, the thick film portion 4a and the thin film portion 4b are both included in the second surface protective layer 4. The thick film portion 4a and the thin film portion 4b are not therefore considerably different in gloss. The boundary between the thick film portion 4a and the thin film portion 4b is less noticeable.

As a result, it is possible to provide a decorative plate 100 that is superior in design and coating suitability and has visual three-dimensionality and tactile three-dimensionality and a decorative sheet 10 that is used for the decorative plate 100.

The first embodiment of the present disclosure has been described in detail so far with reference to the drawings, but a specific configuration is not limited to this embodiment. Design changes and the like within the scope that does not depart from the gist of the present invention are also included. In addition, it is possible to configure the components shown in the embodiment and modification examples described below in combination as appropriate.

### (Modification Example 1)

In the embodiment, the decorative sheet 10 includes the sheet base member 1, the design pattern layer 2, the first surface protective layer 3, and the second surface protective layer 4, but aspects of the decorative sheet are not limited to this. For example, as illustrated in Fig. 2, the decorative sheet may be a decorative plate 100A including a layer such as a vessel ink layer 2a. The vessel ink layer 2a is formed on the upper side UP of the design pattern layer 2, thereby making it possible to provide three-dimensionality visually. A thick film portion is then disposed at the position matching that of the vessel ink layer 2a, thereby making it possible to emphasize the three-dimensionality more.

### (Modification Example 2)

In the embodiment, the sheet base member 1 is a monolayer sheet such as a fibrous sheet or a resin sheet, but aspects of the sheet base member are not limited to this. For example, as illustrated in Fig. 2, a sheet base member 1A may be a composite sheet obtained by sandwiching a resin layer 1c between an upper paper base member 1a and a lower paper base member 1b. For example, a resin layer 1c that does not transmit water vapor may be sandwiched between the upper paper base member 1a and the lower paper base member 1b each including a fibrous sheet, thereby making it possible to impart the sheet base member 1A with moisture resistance.

### (Modification Example 3)

In the embodiment, the thick film portion 4a is formed at positions at which the particle portion 5 is disposed in the second surface protective layer 4, but an aspect of the thick film portion is not limited to this. The thick film portion may be formed at positions at which the particle portion 5 is not disposed in the second surface protective layer. Of grooves into each of which a printing resin flows in a gravure plate used for printing the second surface protective layer, a larger amount of printing resin flows into grooves having a greater depth than the amount of printing resin flowing into grooves having less depth. As a result, in the second surface protective layer, the portions of the grooves having greater depth in the gravure plate have greater height than the height of the portions of the grooves having less depth. That is, a difference in depth between grooves of the gravure plate makes it possible to form a second surface protective layer that is partially different in height without providing the particle portion 5. The height of the portions of the grooves having greater depth in the gravure plate in the second surface protective layer is then set to be 1.2 times or more the height of the portions (thin film portion) of the grooves having less depth, thereby making it possible to form a thick film portion 4Aa at a position at which the particle portion 5 is not disposed in a second surface protective layer 4A as illustrated in Fig. 2.

### (Modification Example 4)

In the embodiment, the design pattern layer 2 is formed by printing a design such as a woodgrain pattern, a stone grain pattern, or a sand grain pattern, but the aspects of the design pattern layer are not limited to this. The design pattern layer does not have to have any design such as a woodgrain pattern, a stone grain pattern, or a sand grain pattern.

The present disclosure will be described in detail by using the following Examples. The present disclosure is not limited to the following Examples.

### (Example 1)

A base paper for decorative paper was prepared as the sheet base member 1. The design pattern layer 2 having a woodgrain pattern was formed on the upper side UP of the sheet base member 1 by gravure printing. The first surface protective layer 3 was formed on the upper side UP of the design pattern layer 2 by gravure printing. The second surface protective layer 4 including the particle portion 5 that is an acrylic resin bead was formed on the upper side UP of the first surface protective layer 3 by gravure printing.

The height H1 of the thick film portion 4a of the second surface protective layer 4 was set to 15 µm and the height H2 of the thin film portion 4b was set to 0.5 µm. In this way, the decorative sheet 10 according to Example 1 was formed.

### (Example 2)

Except that the height H2 of the thin film portion 4b of the second surface protective layer 4 was set to 1 µm, the decorative sheet 10 according to Example 2 was formed by a method similar to that of Example 1.

### (Example 3)

Except that the height H2 of the thin film portion 4b of the second surface protective layer 4 was set to 13 µm, the decorative sheet 10 according to Example 3 was formed by a method similar to that of Example 1.

### (Example 4)

Except that the height H1 of the thick film portion 4a of the second surface protective layer 4 was set to 7 µm and the height H2 of the thin film portion 4b was set to 2.1 µm, the decorative sheet 10 according to Example 4 was formed by a method similar to that of Example 1.

### (Example 5)

Except that the height H1 of the thick film portion 4a of the second surface protective layer 4 was set to 18 µm and the height H2 of the thin film portion 4b was set to 2.1 µm, the decorative sheet 10 according to Example 5 was formed by a method similar to that of Example 1.

### (Example 6)

Except that the height H1 of the thick film portion 4a of the second surface protective layer 4 was set to 31 µm and the height H2 of the thin film portion 4b was set to 2.1 µm, the decorative sheet 10 according to Example 6 was formed by a method similar to that of Example 1.

### (Example 7)

Except that the height H1 of the thick film portion 4a of the second surface protective layer 4 was set to 57 µm and the height H2 of the thin film portion 4b was set to 2.1 µm, the decorative sheet 10 according to Example 7 was formed by a method similar to that of Example 1.

### (Example 8)

Except that the height H1 of the thick film portion 4a of the second surface protective layer 4 was set to 113 µm and the height H2 of the thin film portion 4b was set to 2.1 µm, the decorative sheet 10 according to Example 8 was formed by a method similar to that of Example 1.

### (Comparative Example 1)

Except that the height of the thin film portion of the second surface protective layer was set to 14 µm, the decorative sheet according to Comparative Example 1 was formed by a method similar to that of Example 1.

### (Experiment 1)

Design evaluation tests were carried out for the decorative sheets according to Example 1 to Example 8 and Comparative Example 1. In the design evaluation tests, ten testers carried out organoleptic tests on the designs of the first surface protective layers and the second surface protective layers of the decorative sheets to evaluate the degrees of design appearances.

A 4-level evaluation criterion was adopted and ratings other than level 1 were used as acceptable ratings.
4: Nine or more and ten or less testers rated the design as having favorable appearance.
3: Seven or more and eight or less testers rated the design as having favorable appearance.
2: One or more and six or less testers rated the design as having favorable appearance.
1: Zero testers rated the design as having favorable appearance.

### (Experiment 2)

Tactile evaluation tests were carried out for the decorative sheets according to Example 1 to Example 8 and Comparative Example 1. In the tactile evaluation tests, ten testers carried out tactile organoleptic tests for the second surface protective layers of the decorative sheets to evaluate the tactile degrees.

A 4-level evaluation criterion was adopted and ratings other than level 1 were used as acceptable ratings.
4: Nine or more and ten or less testers rated the texture as favorable.
3: Seven or more and eight or less testers rated the texture as favorable.
2: One or more and six or less testers rated the texture as favorable.
1: Zero testers rated the texture as favorable.

### (Experiment Results)

Table 1 shows results of experiment 1 and experiment 2. The height ratio of Table 1 indicates a value obtained by dividing the height of a thick film portion by the height of a thin film portion and rounding off to the first decimal place. That is, the height ratio indicates how many times the height of a thick film portion is greater the height of a thin film portion.

Example 1 to Example 8 each having a height ratio of 1.2 times or more exhibited favorable results in experiment 1 and experiment 2. Among Examples 1 to 8 and Comparative Example 1, Comparative Example 1, which had the smallest height ratio of less than 1.2 times, was judged to not be acceptable in Experiments 1 and 2.

**[Table 1]**

| | Height (µm) | | Height ratio (times) | Experiment 1 design evaluation | Experiment 2 tactile evaluation |
|---|---|---|---|---|---|
| | thin film portion | thick film portion | | | |
| Example 1 | 0.5 | 15 | 30 | 4 | 4 |
| Example 2 | 1 | 15 | 15 | 4 | 4 |
| Example 3 | 13 | 15 | 1.2 | 2 | 4 |
| Example 4 | 2.1 | 7 | 3.3 | 2 | 2 |
| Example 5 | 2.1 | 18 | 8.6 | 4 | 3 |
| Example 6 | 2.1 | 31 | 14.8 | 4 | 3 |
| Example 7 | 2.1 | 57 | 27.1 | 4 | 4 |
| Example 8 | 2.1 | 113 | 53.8 | 4 | 4 |
| Comparative Example 1 | 14 | 15 | 1.1 | 1 | 1 |

A second embodiment of the present disclosure will be described with reference to the drawings.

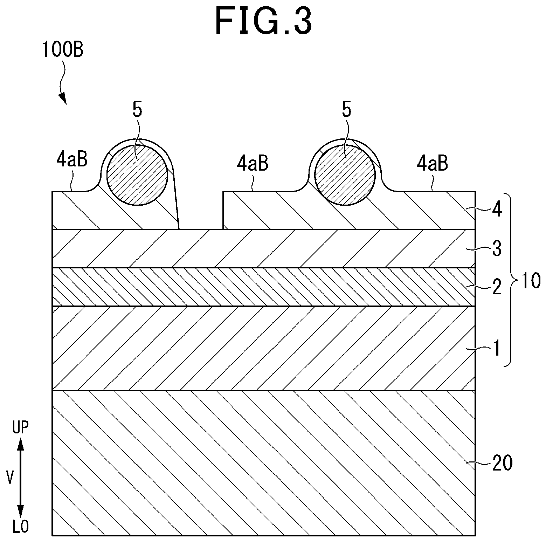

Fig. 3 is a schematic cross-sectional view of a decorative plate 100B according to the present embodiment.

In the present embodiment, as illustrated in Fig. 3, the thickness direction of the decorative plate 100B is defined as the "vertical direction V", the side on which the decorative plate 100B is provided with the substrate 20 is defined as the "lower side LO" in the vertical direction V, and the opposite side to the lower side LO is defined as the "upper side UP" in the vertical direction V.

The decorative plate 100B includes the decorative sheet 10 and the substrate 20.

The substrate 20 is provided on the lower side LO of the decorative sheet 10. It is possible to adopt a particle board, a medium-density fiberboard (MDF), or the like as the substrate 20. In addition, a metal-based plate-shaped member such as aluminum or stainless steel or a composite board having metal such as aluminum bonded to both sides of a core including resin such as polyethylene may be adopted as the substrate 20.

The decorative sheet 10 includes the sheet base member 1, the design pattern layer 2, the first surface protective layer 3, and the second surface protective layer 4.

The sheet base member 1 is a layer that is provided on the lower side LO of the decorative sheet 10. The sheet base member 1 is a sheet-shaped layer including a known material that allows for printing thereon. It is possible to adopt a fibrous sheet such as thin paper or titanium paper as the sheet base member 1. In addition, a resin sheet such as polyethylene, polypropylene, or polyvinyl chloride may be adopted as the sheet base member 1.

The design pattern layer 2 is a layer provided on the upper side UP of the sheet base member 1. The design pattern layer 2 is formed, for example, by printing a design such as a woodgrain pattern, a stone grain pattern, or a sand grain pattern on the upper side UP of the sheet base member 1. It is possible to adopt, for example, a known printing method such as gravure printing, offset printing, flexographic printing, silk-screen printing, or ink-jet printing as the method for printing the design pattern layer 2. It is possible to adopt, for the design pattern layer 2, a known printing ink suitable for a printing method to be adopted.

The first surface protective layer 3 is a layer that is provided on the upper side UP of the design pattern layer 2. It is desirable to adopt, for the first surface protective layer 3, a material that is transparent or semi-transparent to the degree to which the material allows the design of the design pattern layer 2 to be seen through. It is possible to adopt a thermosetting resin having a urethane bond, an ionizing-radiation-curable resin such as an acryl-based resin, or the like as the first surface protective layer 3.

It is possible to adopt, for example, a known printing method such as gravure printing, offset printing, flexographic printing, silk-screen printing, or ink-jet printing as the method for laminating the first surface protective layer 3. In addition, the first surface protective layer 3 may be laminated by using a known coating device.

The second surface protective layer 4 is a layer that is partially provided on the upper side UP of the first surface protective layer 3. It is desirable to adopt, for the second surface protective layer 4, a material that is transparent or semi-transparent to the degree to which the material allows the design of the design pattern layer 2 to be visible through the first surface protective layer 3. It is possible to adopt a thermosetting resin having a urethane bond, an ionizing-radiation-curable resin such as an acryl-based resin, or the like as the second surface protective layer 4.

The second surface protective layer 4 includes the particle portion 5 formed by using a synthetic resin bead or an inorganic compound filler. It is desirable to adopt, for the particle portion 5, a material that is transparent or semi-transparent to the degree to which the material allows the design of the design pattern layer 2 to be seen through the first surface protective layer 3 and the second surface protective layer 4. It is desirable to adopt an acrylic resin bead that is high in transparency as the particle portion 5.

The second surface protective layer 4 includes the particle portion 5 formed by using an acrylic resin bead or the like in a printing resin such as a thermosetting resin that forms the second surface protective layer 4. When the second surface protective layer 4 is applied on the upper side UP of the first surface protective layer 3, a general portion 4aB formed by using only a printing resin that forms the second surface protective layer 4 and a portion at which the particle portion 5 is disposed are formed on the surface of the first surface protective layer 3 on the upper side UP as illustrated in Fig. 3. The thickness (height) of the portion at which the particle portion 5 is disposed in the vertical direction V is greater than the thickness of the general portion 4aB by the particle diameter of the particle portion 5.

The general portion 4aB has, for example, a coating thickness of 0.5 µm or more and 13 µm or less. The general portion 4aB is laminated on the upper side UP of the first surface protective layer 3 to have substantially constant coating thickness. In addition, it is desirable that the particle portion 5 have an average particle diameter of 15 µm or more and 200 µm or less. The particle portion 5 has a larger particle diameter than the coating thickness of the general portion 4aB and the thickness of the portion at which the particle portion 5 is disposed in the second surface protective layer 4 is thus greater than the thickness of the general portion 4aB. As a result, an uneven shape is formed on the surface of the second surface protective layer 4. It is therefore possible to form an uneven shape by using the particle portion 5 even without carrying out embossing or the like on the surface of the decorative sheet 10 and the decorative sheet 10 can have visual three-dimensionality and tactile three-dimensionality.

It is possible to adopt intaglio printing such as gravure printing as a method for laminating the second surface protective layer 4.
For example, of grooves into each of which a printing resin flows in a gravure plate used for gravure printing, a printing resin and the particle portion 5 flow into grooves deeper than the particle diameter of the particle portion 5, but only the printing resin flows, without the particle portion 5, into grooves shallower than the particle diameter of the particle portion 5. As a result, a portion at which the particle portion 5 is disposed and a portion at which the particle portion 5 is not disposed are formed in the second surface protective layer 4 and an uneven shape is formed on the surface of the second surface protective layer 4 by the particle diameter of the particle portion 5.

Here, the area ratio of the particle portion 5 to the second surface protective layer 4 in a plan view from the upper side UP is 5% or more and 70% or less. When the area ratio of the particle portion 5 to the second surface protective layer 4 is less than 5%, the extent (area) of an uneven shape formed by the particle portion 5 is small in comparison with the area coated with the second surface protective layer 4, resulting in inferior tactile three-dimensionality. In addition, when the particle portion 5 has an area ratio of greater than 70%, the particle portion 5 occupies a high ratio in comparison with the area coated with the second surface protective layer 4 and an uneven shape formed by the particle portion 5 is not thus noticeable, resulting in inferior visual three-dimensionality.

In addition, it is desirable that the area ratio of the particle portion 5 to the second surface protective layer 4 in a plan view from the upper side UP be 18% or more and 48% or less. The area ratio of the particle portion 5 to the second surface protective layer 4 is set to 18% or more to allow the decorative sheet 10 to have an uneven shape within a sufficient extent (area) and have superior tactile three-dimensionality. In addition, the area ratio of the particle portion 5 is set to 48% or less to prevent the particle portion 5 from occupying too high a ratio in comparison with the area coated with the second surface protective layer 4 and cause the uneven shape to be sufficiently noticeable. The decorative sheet 10 is thus allowed to have superior three-dimensionality.

In addition, it is desirable that the first surface protective layer 3 and the second surface protective layer 4 have different glosses.
Methods for giving a difference in gloss between the first surface protective layer 3 and the second surface protective layer 4 include a method in which a matting agent is added to the first surface protective layer 3 or the second surface protective layer 4. For example, in a case where a matting agent is added to the first surface protective layer 3 and no matting agent is added to the second surface protective layer 4, the second surface protective layer 4 has higher gloss than that of the first surface protective layer 3. Different quantities of matting agents to the degree to which it is possible to provide a difference in gloss between the first surface protective layer 3 and the second surface protective layer 4 may be added to the first surface protective layer 3 and the second surface protective layer 4. The difference in gloss between the first surface protective layer 3 and the second surface protective layer 4 allows a human to feel three-dimensionality visually by using an optical illusion and makes it possible to emphasize the visual three-dimensionality of the decorative sheet 10 more.

In addition, it is desirable that the second surface protective layer 4 be formed at a position matching that of the design pattern layer 2.
For example, in a case where the design pattern layer 2 has a woodgrain pattern, the formation of the second surface protective layer 4 at the position matching the vessel portions of the woodgrain pattern makes it possible to provide visual three-dimensionality and tactile three-dimensionality to the vessel portions by using the thickness of the second surface protective layer 4 in the vertical direction V because the second surface protective layer 4 is partially provided on the upper side UP of the first surface protective layer 3. In addition, in a case where the first surface protective layer 3 and the second surface protective layer 4 have a difference in gloss, the difference in gloss between the first surface protective layer 3 and the second surface protective layer 4 makes it possible to emphasize the visual three-dimensionality of the vessel portions more.

In addition, it is desirable that the particle portion 5 of the second surface protective layer 4 be formed at a position matching that of the design pattern layer 2. For example, in a case where the design pattern layer 2 has a woodgrain pattern, the formation of the particle portion 5 at the position matching the vessel portions of the woodgrain pattern makes it possible to emphasize the visual three-dimensionality and the tactile three-dimensionality of the vessel portions more by using the difference (uneven shape) in thickness in the vertical direction V between a portion at which the particle portion 5 is disposed and the general portion 4aB at which the particle portion 5 is not disposed. The combination of the visual three-dimensionality and the tactile three-dimensionality emphasizes the three-dimensionality of the vessel portions more and makes it possible to provide a decorative sheet 10 having a woodgrain pattern that looks more similar to natural wood.

In the decorative sheet 10 and the decorative plate 100B according to the present embodiment, the second surface protective layer 4 is partially provided on the upper side UP of the first surface protective layer 3. The decorative sheet 10 and the decorative plate 100B thus have visual three-dimensionality and tactile three-dimensionality. In addition, the second surface protective layer 4 includes a particle portion formed by using a synthetic resin bead or an inorganic compound filler and a portion at which the particle portion 5 is disposed and the general portion 4aB at which the particle portion 5 is not disposed thus have a difference in thickness in the vertical direction V to form an uneven shape on the surface of the second surface protective layer 4. The uneven shape formed on the surface of the second surface protective layer 4 emphasizes visual three-dimensionality and tactile three-dimensionality more and the decorative sheet 10 and the decorative plate 100B thus have superior visual three-dimensionality and tactile three-dimensionality. That is, the decorative sheet 10 and the decorative plate 100B make it possible to provide superior visual three-dimensionality and tactile three-dimensionality because of the two layers of the first surface protective layer 3 and the second surface protective layer 4 and the decorative sheet 10 and the decorative plate 100B are superior in coating suitability.

In addition, an uneven shape that provides the decorative sheet 10 and the decorative plate 100B with visual three-dimensionality and tactile three-dimensionality is formed by the general portion 4aB and the particle portion 5 in the second surface protective layer 4.

That is, the uneven shape is formed by only the second surface protective layer 4, and the boundary between the general portion 4aB that forms the uneven shape and a portion thicker than the general portion 4aB at which particle portion 5 is disposed is thus less noticeable in the second surface protective layer 4. Further, the area ratio of the particle portion 5 to the second surface protective layer 4 in a plan view from the upper side UP is 5% or more and 70% or less and the decorative sheet 10 and the decorative plate 100B thus have superior visual three-dimensionality and tactile three-dimensionality. As a result, it is possible to provide a decorative plate 100B superior in design and coating suitability and the decorative sheet 10 used for the decorative plate 100B.

The second embodiment of the present disclosure has been described in detail so far with reference to the drawings, but a specific configuration is not limited to this embodiment. Design changes and the like within the scope that does not depart from the gist of the present invention are also included. In addition, it is possible to configure the components shown in the first embodiment and the modification examples of the first embodiment, and the second embodiment and modification examples described below in combination as appropriate.

### (Modification Example 1C)

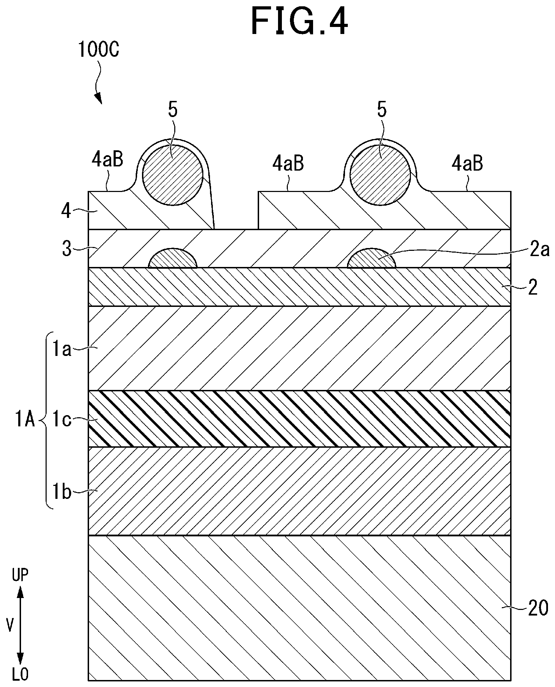

In the embodiment, the decorative sheet 10 includes the sheet base member 1, the design pattern layer 2, the first surface protective layer 3, and the second surface protective layer 4, but aspects of the decorative sheet are not limited to this. For example, as illustrated in Fig. 4, the decorative sheet may be a decorative plate 100C including a layer such as the vessel ink layer 2a. The vessel ink layer 2a is formed on the upper side UP of the design pattern layer 2, thereby making it possible to provide three-dimensionality visually. The particle portion 5 is then disposed at the position matching that of the vessel ink layer 2a, thereby making it possible to emphasize the three-dimensionality more.

### (Modification Example 2C)

In the embodiment, the sheet base member 1 is a monolayer sheet such as a fibrous sheet or a resin sheet, but aspects of the sheet base member are not limited to this. For example, as illustrated in Fig. 4, the sheet base member 1A may be a composite sheet obtained by sandwiching the resin layer 1c between the upper paper base member 1a and the lower paper base member 1b. For example, a resin layer 1c that does not transmit water vapor is sandwiched between the upper paper base member 1a and the lower paper base member 1b each including a fibrous sheet, thereby making it possible to provide the sheet base member 1A with moisture resistance.

The present disclosure will be described in detail by using the following Examples. The present disclosure is not limited to the following Examples.

### (Example 1B)

Base paper (GF610 manufactured by KJ Specialty Paper Corporation) for decorative paper was prepared as the sheet base member 1. The design pattern layer 2 was formed on the upper side UP of the sheet base member 1 by gravure printing with a urethane ink (PCNT manufactured by TOYO INK CO., LTD.). The first surface protective layer 3 was formed on the upper side UP of the design pattern layer 2 by gravure printing with a thermosetting resin (G125HV manufactured by DIC Graphics Corporation). The second surface protective layer 4 including the particle portion 5 was formed on the upper side UP of the first surface protective layer 3 by gravure printing with an acrylic resin bead (AR650MX manufactured by TOYOBOSEKI Co., Ltd.) having an average particle diameter of 15 µm or more and 200 µm or less as the particle portion 5. A thermosetting resin (G125HV manufactured by DIC Graphics Corporation) was used for the second surface protective layer 4.

In addition, in the second surface protective layer 4, the area ratio of the particle portion 5 to the second surface protective layer 4 in a plan view from the upper side UP was set to 5%. In this way, the decorative sheet 10 according to Example 1B was formed.

Here, the area ratio (average area ratio) of the particle portion 5 to the second surface protective layer 4 was a value obtained by capturing an image of a plan view of the second surface protective layer 4 from the upper side UP with a laser microscope (LEXT manufactured by Olympus Corporation) and measuring the ratio of the area of the particle portion 5 to the area of the second surface protective layer 4 in the captured image.

### (Example 2B)

Except that the area ratio of the particle portion 5 to the second surface protective layer 4 in a plan view from the upper side UP was set to 17.8%, the decorative sheet 10 according to Example 2B was formed by a method similar to that of Example 1B.

### (Example 3B)

Except that the area ratio of the particle portion 5 to the second surface protective layer 4 in a plan view from the upper side UP was set to 48.6%, the decorative sheet 10 according to Example 3B was formed by a method similar to that of Example 1B.

### (Example 4B)

Except that the area ratio of the particle portion 5 to the second surface protective layer 4 in a plan view from the upper side UP was set to 70%, the decorative sheet 10 according to Example 4B was formed by a method similar to that of Example 1B.

### (Comparative Example 1B)

Except that the area ratio of the particle portion to the second surface protective layer in a plan view from the upper side was set to 2.3%, the decorative sheet according to Comparative Example 1B was formed by a method similar to that of Example 1B.

### (Comparative Example 2B)

Except that the area ratio of the particle portion to the second surface protective layer in a plan view from the upper side was set to 82.1%, the decorative sheet according to Comparative Example 2B was formed by a method similar to that of Example 1B.

### (Experiment 1B)

Tactile evaluation tests were carried out for the decorative sheets according to Example 1B to Example 4B and Comparative Example 1B and Comparative Example 2B. In the tactile evaluation tests, ten testers carried out tactile organoleptic tests for the second surface protective layers of the decorative sheets to evaluate the tactile degrees.

A 4-level evaluation criterion was adopted and ratings higher than or equal to level 3 were judged as acceptable ratings.
4: Nine or more and ten or less testers rated the texture as favorable.
3: Seven or more and eight or less testers rated the texture as favorable.
2: One or more and six or less testers rated the texture as favorable.
1: Zero testers rated the texture as favorable.

### (Experiment 2B)

Design evaluation tests were carried out for the decorative sheets according to Example 1B to Example 4B and Comparative Example 1B and Comparative Example 2B. In the design evaluation tests, ten testers carried out organoleptic tests on the designs of the first surface protective layers and the second surface protective layers of the decorative sheets to evaluate the degrees of design appearances.

A 4-level evaluation criterion was adopted and ratings higher than or equal to level 3 were judged as acceptable ratings.
4: Nine or more and ten or less testers rated the design as having favorable appearance.
3: Seven or more and eight or less testers rated the design as having favorable appearance.
2: One or more and six or less testers rated the design as having favorable appearance.
1: Zero testers rated the design as having favorable appearance.

### (Experiment Results)

Table 1 shows results of experiment 1B and experiment 2B. The decorative sheets 10 according to Example 1B to Example 4B in each of which the area ratio (average area ratio) of the particle portion 5 to the second surface protective layer 4 in a plan view from the upper side UP was 5% or more and 70% or less exhibited favorable results in the experiment 1B and the experiment 2B. The decorative sheets 10 according to Example 2B and Example 3B in each of which the area ratio of the particle portion 5 was 18% or more and 48% or less exhibited more favorable results in experiment 1B and experiment 2B.

Comparative Example 1B in which the area ratio of the particle portion to the second surface protective layer was less than 5%, which was the smallest value of the values of Example 1B and Example 4B and Comparative Example 1B and Comparative Example 2B, was judged to not be acceptable in experiment 1B. In addition, Comparative Example 2B in which the area ratio of the particle portion was higher than 70%, which was the largest value of the values of Example 1B to Example 4B and Comparative Example 1B and Comparative Example 2B, was judged to not be acceptable in experiment 2B.

**[Table 2]**

| | Experiment 1B tactile evaluation | Experiment 2B design evaluation | Average area ratio (%) |
|---|---|---|---|
| Example 1B | 3 | 4 | 5.0 |
| Example 2B | 4 | 4 | 17.8 |
| Example 3B | 4 | 4 | 48.6 |
| Example 4B | 4 | 3 | 70.0 |
| Comparative Example 1B | 2 | 4 | 2.3 |
| Comparative Example 2B | 4 | 2 | 82.1 |

### Industrial Applicability

A decorative sheet and a decorative plate according to the present disclosure make it possible to provide a decorative plate that is superior in design and coating suitability and a decorative sheet that is used for the decorative plate.

### Reference Signs List

- 100, 100A, 100B, 100C: Decorative plate
- 10: Decorative sheet
- 1: Sheet base member
- 2: Design pattern layer
- 3: First surface protective layer
- 4: Second surface protective layer
- 4a: Thick film portion
- 4b: Thin film portion
- 5: Particle portion
- 20: Substrate
- H1: Height of thick film portion
- H2: Height of thin film portion
- V: Vertical direction
- UP: Upper side
- LO: Lower side

## Claims

1. A decorative sheet comprising:
a sheet base member;
a design pattern layer that is formed on an upper side of the sheet base member by printing;
a first surface protective layer that is laminated on the upper side of the design pattern layer; and
a second surface protective layer that is partially laminated on the upper side of the first surface protective layer, the second surface protective layer having gloss different from that of the first surface protective layer, wherein
the second surface protective layer includes
a thin film portion that is laminated on the upper side of the design pattern layer, and
a thick film portion having a height 1.2 times or more the height of the thin film portion in a vertical direction.

2. The decorative sheet according to claim 1, wherein
the second surface protective layer includes a particle portion that is formed by using a synthetic resin bead or an inorganic compound filler, the particle portion forming the thick film portion, and
the particle portion has an average particle diameter of 15 µm or more.

3. The decorative sheet according to claim 1, wherein the second surface protective layer includes a thermosetting resin having a urethane bond.

4. The decorative sheet according to claim 1, wherein the second surface protective layer includes an ionizing-radiation-curable resin.

5. The decorative sheet according to claim 2, wherein the particle portion is an acrylic resin bead.

6. A decorative plate comprising:
the decorative sheet according to any one of claims 1 to 5; and
a substrate that is bonded on a lower side of the decorative sheet.

7. A decorative sheet comprising:
a sheet base member;
a design pattern layer that is provided in on an upper side of the sheet base member;
a first surface protective layer that is provided on the upper side of the design pattern layer; and
a second surface protective layer that is partially provided on the upper side of the first surface protective layer, the second surface protective layer including a particle portion that is formed by using a synthetic resin bead or an inorganic compound filler, the particle portion forming an uneven shape on a surface of the second surface protective layer, wherein
an area ratio of the particle portion to the second surface protective layer in a plan view from the upper side is 5% or more and 70% or less.

8. The decorative sheet according to claim 7, wherein the area ratio of the particle portion to the second surface protective layer in plan view from the upper side is 18% or more and 48% or less.

9. The decorative sheet according to claim 7, wherein the second surface protective layer has gloss different from that of the first surface protective layer.

10. The decorative sheet according to claim 9, wherein the second surface protective layer includes a thermoset resin having a urethane bond.

11. The decorative sheet according to claim 7, wherein the particle portion has an average particle diameter of 15 µm or more and 200 µm or less.

12. The decorative sheet according to claim 11, wherein the particle portion is formed by using an acrylic resin bead.

13. A decorative plate comprising:
the decorative sheet according to any one of claims 7 to 12; and
a substrate that is provided on a lower side of the decorative sheet.
